# EUROPEAN PATENT APPLICATION

(11) **EP 4 615 072 A1**
(43) Date of publication of application: **10.09.2025**
(21) Application number: 22964120.4
(22) Date of filing: 04.11.2022
(51) Int. Cl.: H04W 52/46

(54) **INDICATION METHOD FOR REPEATER, AND REPEATER AND NETWORK DEVICE**

(71) Applicant: FUJITSU LIMITED, Kawasaki-shi, Kanagawa 211-8588 (JP)
(72) Inventor: ZHANG, Lei, Beijing 100022 (CN); JIANG, Qinyan, Beijing 100022 (CN); WANG, Xin, Beijing 100022 (CN)
(74) Representative: Haseltine Lake Kempner LLP
(86) International application number: PCT/CN2022/130127
(87) International publication number: WO 2024/092819

(57) **Abstract**

Embodiments of the present disclosure provide an indicating method for a repeater, a repeater and a network device. The method includes: a repeater receives configuration information from a network device, wherein the configuration information at least configures/indicates a first resource and/or a second resource and/or a third resource; and performs forwarding in the first resource and/or does not perform forwarding in the second resource according to the configuration information.

## Description

### TECHNICAL FIELD

The present disclosure relates to the technical field of communication.

### BACKGROUND

Compared with traditional 3G (third generation mobile communication technology) and 4G (fourth generation mobile communication technology) systems, a 5G (fifth generation mobile communication technology) system can provide a greater bandwidth and a higher data rate, and can support more types of terminals and vertical services.

To this end, in addition to traditional telecommunication spectrums, the 5G system is also deployed on new spectrums, frequencies of the new spectrums are significantly higher than frequencies of the traditional telecommunication spectrums used by 3G and 4G systems. For example, the 5G system may be deployed at millimeter wave bands (28GHz, 38GHz, 60GHz and above, etc.).

According to the propagation law of a wireless signal, the higher a frequency of a carrier where it is located, the more serious the fading of the signal during propagation. Therefore, in actual deployment, compared to previous 3G, 4G systems, the 5G system more needs a cell method for coverage enhancement, in particular a 5G system deployed in a millimeter wave band. How to better enhance 5G system cell coverage has become one of urgent problems to be solved.

On the other hand, compared with traditional 3G and 4G systems, the 5G system uses a more advanced multi-antenna propagation technology and corresponding transmission devices. In order to support more flexible and complex services, the 5G system is more complex than 3G and 4G systems. Accordingly, power consumption of the 5G system is higher than that of 3G and 4G systems. How to reduce the power consumption of the 5G system and save energy overhead is also one of urgent problems to be solved.

It should be noted that the above introduction to the technical background is just to facilitate a clear and complete description of the technical solutions of the present disclosure, and is elaborated to facilitate understanding of persons skilled in the art. It cannot be considered that these technical solutions are known by persons skilled in the art just because these solutions are elaborated in the Background Art of the present disclosure.

### SUMMARY

For at least one of the above problems, embodiments of the present disclosure provide an indicating method for a repeater, a repeater and a network device. The repeater has a capability of communicating with the network device, is capable of better strengthening signal coverage under a network configuration and coping with environmental changes (for example, reducing interference to other network devices and terminal equipments during forwarding), moreover is further capable of reducing system power consumption and saving energy overhead.

According to one aspect of the embodiments of the present disclosure, an indicating method for a repeater is provided, including:
a repeater receives configuration information from a network device, wherein the configuration information at least configures/indicates a first resource and/or a second resource and/or a third resource; and
the repeater performs forwarding in the first resource and/or does not perform forwarding in the second resource according to the configuration information.

According to another aspect of the embodiments of the present disclosure, a repeater is provided, including:
a receiving unit configured to receive configuration information from a network device, wherein the configuration information at least configures/indicates a first resource and/or a second resource and/or a third resource; and
a control unit configured to perform forwarding in the first resource and/or not to perform forwarding in the second resource according to the configuration information.

According to a further aspect of the embodiments of the present disclosure, an indicating method for a repeater is provided, including:
a network device transmits configuration information to a repeater; and
wherein the configuration information at least configures/indicates a first resource and/or a second resource and/or a third resource, and the configuration information is used by the repeater to determine to perform forwarding in the first resource and/or not to perform forwarding in the second resource.

According to another aspect of the embodiments of the present disclosure, a network device is provided, including:
a transmitting unit configured to transmit configuration information to a repeater;
wherein the configuration information at least configures/indicates a first resource and/or a second resource and/or a third resource, and the configuration information is used by the repeater to determine to perform forwarding in the first resource and/or not to perform forwarding in the second resource.

According to a further aspect of the embodiments of the present disclosure, a communication system is provided, including:
a repeater configured to receive configuration information from a network device, wherein the configuration information at least configures/indicates a first resource and/or a second resource and/or a third resource; and perform forwarding in the first resource and/or not to perform forwarding in the second resource according to the configuration information; and
the network device configured to transmit the configuration information to the repeater.

One of advantageous effects of the embodiments of the present disclosure lies: a repeater receives configuration information from a network device, wherein the configuration information at least configures/indicates a first resource and/or a second resource and/or a third resource. Thereby, the repeater is capable of performing forwarding or not performing forwarding according to the configuration information, which can thus reduce unnecessary interference and improve transmission efficiency of the entire network.

Referring to the later description and drawings, specific implementations of the present disclosure are disclosed in detail, indicating a mode that the principle of the present disclosure may be adopted. It should be understood that the implementations of the present disclosure are not limited in terms of a scope. Within the scope of the spirit and terms of the attached claims, the implementations of the present disclosure include many changes, modifications and equivalents.

Features that are described and/or illustrated with respect to one implementation may be used in the same way or in a similar way in one or more other implementations and in combination with or instead of the features in the other implementations.

It should be emphasized that the term "comprise/include" when being used herein refers to presence of a feature, a whole piece, a step or a component, but does not exclude presence or addition of one or more other features, whole pieces, steps or components.

### BRIEF DESCRIPTION OF DRAWINGS

An element and a feature described in a drawing or an implementation of the embodiments of the present disclosure may be combined with an element and a feature shown in one or more other drawings or implementations. In addition, in the drawings, similar labels represent corresponding components in several drawings and may be used to indicate corresponding components used in more than one implementation.

The included drawings are used to provide a further understanding on the embodiments of the present disclosure, constitute a part of the Specification, are used to illustrate the implementations of the present disclosure, and expound the principle of the present disclosure together with the text description. Obviously, the drawings in the following description are only some embodiments of the present disclosure. Persons skilled in the art may further obtain other drawings according to these drawings under the premise that they do not pay inventive labor. In the drawings:
FIG. 1 is a schematic diagram of an application scenario of the embodiments of the present disclosure;
FIG. 2 is a schematic diagram of a NCR in the embodiments of the present disclosure;
FIG. 3 is a schematic diagram of NCR forwarding in the embodiments of the present disclosure;
FIG. 4 is another schematic diagram of NCR forwarding in the embodiments of the present disclosure;
FIG. 5 is a schematic diagram of an indicating method for a repeater in the embodiments of the present disclosure;
FIG. 6 is a schematic diagram of a repeater in the embodiments of the present disclosure;
FIG. 7 is a schematic diagram of an indicating method for a repeater in the embodiments of the present disclosure;
FIG. 8 is a schematic diagram of a network device in the embodiments of the present disclosure;
FIG. 9 is a schematic diagram of an electronic device in the embodiments of the present disclosure.

### DETAILED DESCRIPTION

Referring to the drawings, through the following specification, the aforementioned and other features of the present disclosure will become obvious. The specification and the drawings specifically disclose particular implementations of the present disclosure, showing partial implementations which may adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

In the embodiments of the present disclosure, the term "a communication network" or "a wireless communication network" may refer to a network that meets any of the following communication standards, such as Long Term Evolution (LTE), LTE-Advanced (LTE-A), Wideband Code Division Multiple Access (WCDMA), High-Speed Packet Access (HSPA) and so on.

And, communication between devices in a communication system may be carried out according to a communication protocol at any stage, for example may include but be not limited to the following communication protocols: 1G (generation), 2G, 2.5G, 2.75G, 3G, 4G, 4.5G, and future 5G, New Radio (NR) and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: a Base Station (BS), an Access Point (AP), a Transmission Reception Point (TRP) node, a broadcast transmitter, a Mobile Management Entity (MME), a gateway, a server, a Radio Network Controller (RNC), a Base Station Controller (BSC) and so on.

The base station may include but be not limited to: a node B (NodeB or NB), an evolution node B (eNodeB or eNB), a 5G base station (gNB) and an IAB donor, etc., and may further includes a Remote Radio Head (RRH), a Remote Radio Unit (RRU), a relay or a low power node (such as femto, pico, etc.). And the term "base station" may include their some or all functions, each base station may provide communication coverage to a specific geographic region. The term "cell" may refer to a BS and/or its coverage area, which depends on the context in which this term is used.

In the embodiments of the present disclosure, the term "a User Equipment (UE)" refers to, for example, a device that accesses a communication network and receives network services through a network device, or may also be called "Terminal Equipment (TE)". The terminal equipment may be fixed or mobile, and may also be called a Mobile Station (MS), a terminal, a user, a Subscriber Station (SS), an Access Terminal (AT) and a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

To enhance coverage, the 3GPP Rel-17 study introduced an RF repeater to forward transmission between a terminal equipment (UE) and a network device (base station). For the network device and the terminal equipment, the RF repeater introduced in Rel-17 is transparent, that is, the network device and the terminal equipment do not know existence of the RF repeater.

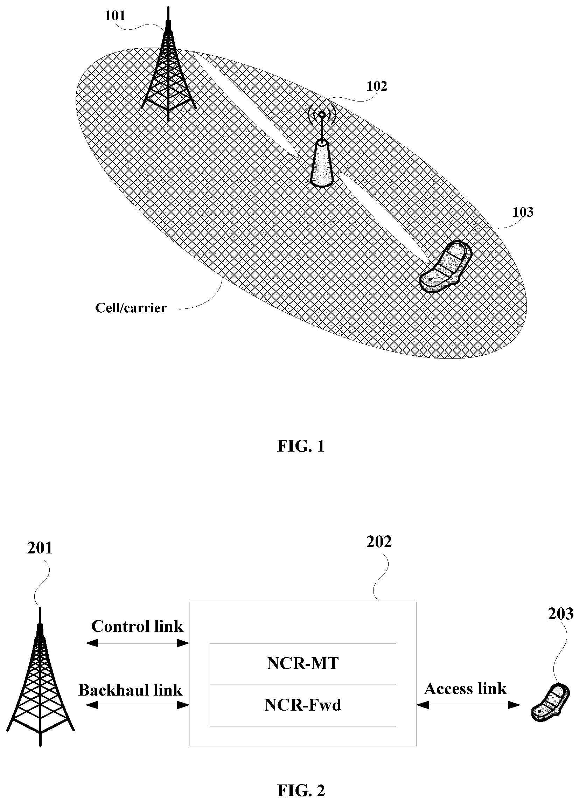

FIG. 1 is a schematic diagram of an application scenario of the embodiments of the present disclosure. As shown in FIG. 1, for convenience of description, description is made by taking "a network device (such as a 5G base station gNB) 101, a repeater 102 and a terminal equipment (such as a UE) 103" as an example, the present disclosure is not limited to this.

As shown in FIG. 1, the terminal equipment 103 establishes a connection with and communicates with the network device 101. In order to increase the quality of communication, a channel/signal transmitted between the terminal equipment 103 and the network device 101 is forwarded via the repeater 102. Channel/signal interaction among the network device 101, the terminal equipment 103 and the repeater 102 may adopt a beam-based receiving and transmitting method. The beam may be a fixed beam or an adaptive beam.

As shown in FIG. 1, the network device 101 may have a cell/carrier, the network device 101, the repeater 102 and the terminal equipment 103 may perform forwarding/ communication in the cell; however, the present disclosure is not limited to this, for example, the network device 101 may further have other cells/carriers.

In the embodiments of the present disclosure, transmission of existing or further implementable services may be carried out between the network device and the terminal equipment. For example, these services may include but be not limited to: enhanced Mobile Broadband (eMBB), massive Machine Type Communication (mMTC), Ultra-Reliable Low-Latency Communication (URLLC), Internet of Vehicles (V2X) communication and so on.

A traditional repeater does not have a capability of communicating with a network device. Thus, although the traditional repeater can help enhance a signal strength, it is not flexible enough to cope with complex environmental changes. Deploying the traditional repeater in a 5G network (in particular in a high-frequency 5G network) may possibly cause unnecessary interference with other network devices and/or terminal equipments, thereby reducing the transmission efficiency (e.g., throughput) of the entire network. In order to make forwarding of the repeater more flexible to adapt to the characteristics of a 5G network, the network device needs to assist the repeater and can configure the forwarding of the repeater according to a condition of the network.

To enhance NR coverage, 3GPP Rel-18 proposes a network-controlled repeater (NCR) scheme to forward a signal between a network device and a terminal equipment. The NCR may communicate directly with the network device via a control link to assist a forwarding operation of the NCR.

FIG. 2 is a schematic diagram of a NCR in the embodiments of the present disclosure. As shown in FIG. 2, NCR 202 is configured between the network device 201 and the terminal equipment 203. NCR 202 may include two modules/components: a mobile terminal of a repeater (NCR-MT) and a forwarding module of the repeater (NCR-Fwd); the NCR-Fwd is also called a routing unit of a NCR (NCR-RU). The NCR-MT is mainly used to communicate with a network device, and the NCR-Fwd is mainly used to forward a signal between a network device and a terminal equipment.

As shown in FIG. 2, the NCR in the embodiments of the present disclosure may have three links: a control link (C-link), a backhaul link (BH link) for forwarding, and an access link (AC link). The C-link is used for communication between a NCR and a network device. The BH link is used for a repeater receiving a to-be-forwarded signal from a network device, or, forwarding a signal from an AC link (such as a terminal equipment) to the network device. The AC link is used for a repeater forwarding a signal from a network device (e.g., to a terminal equipment), or, receiving a signal for being forwarded to the BH link (e.g., a to-be-forwarded signal from the terminal equipment).

The inventor recognizes that a 5G system is more complex than previous 3G, 4G systems, for example, is capable of supporting more types of services and terminal types, and for another example, needs to be deployed in multiple frequency bands and scenarios, etc. Compared with traditional RF repeaters, the NCR needs to have a beam-based transceiving (forwarding) function.

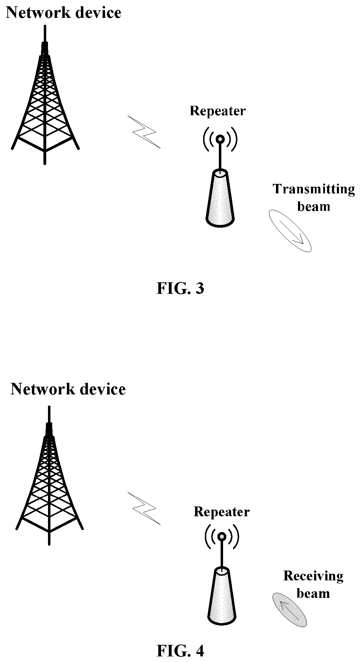

FIG. 3 is a schematic diagram of NCR forwarding in the embodiments of the present disclosure. As shown in FIG. 3, a repeater uses a transmitting beam on an AC link to forward out a signal from a network device. FIG. 4 is another schematic diagram of NCR forwarding in the embodiments of the present disclosure. As shown in FIG. 4, a repeater uses a receiving beam on an AC link to receive a signal for being forwarded to a network device.

Various implementations of the embodiments of the present disclosure will be described below with reference to the drawings. These implementations are exemplary only and are not limitations to the present disclosure. The repeater in the embodiments of the present disclosure may operate in a first frequency range (FR1), or may operate in a second frequency range (FR2), and may further operate in the first frequency range (FR1) and the second frequency range (FR2); for specific contents of FR1 and FR2, relevant technologies may be referred to.

In the embodiments of the present disclosure, a repeater may communicate with a network device, the repeater may receive a communication channel/signal transmitted by the network device, and demodulate/decode the channel/signal, thereby obtaining information transmitted by the network device to the repeater, the signal processing process is hereinafter referred to as "communication". The repeater may further forward a channel/signal transmitted between the network device and the terminal equipment, the repeater does not demodulate/decode the channel/signal, may perform amplification and other processing, the signal processing process is hereinafter referred to as "forwarding". "Communication" and "forwarding" are collectively referred to as "transmission". In addition, "perform transmission or reception on an AC link" may be equivalent to "perform forwarding on an AC link", and "perform transmission or reception on a control link" may be equivalent to "perform communication on a control link". The above terms are only for the sake of description, and do not constitute restrictions on the present disclosure.

For the sake of simplicity, the channel/signal that performs direct communication between a network device and a repeater or between a third device (such as a terminal equipment) and a repeater may be called a communication signal. When transmitting the communication signal, the repeater needs to perform encoding and/or modulation, and when receiving the communication signal, the repeater needs to perform decoding and/or demodulation. In addition, the channel/signal forwarded via a repeater may be called a forwarded signal, the repeater may perform signal processing such as amplification of the forwarded signal, but will not perform decoding and/or demodulation.

In the embodiments of the present disclosure, the repeater may also be expressed as a transponder, a radio frequency repeater, a relay, a radio frequency relay; or may also be expressed as a transponder node, a repeater node, a relay node, an intelligent transponder, an intelligent repeater, an intelligent relay, an intelligent transponder node, an intelligent repeater node, an intelligent relay node, etc., the present disclosure is not limited to this.

In the embodiments of the present disclosure, the network device may be a device of a serving cell of a terminal equipment, or a device of a cell where a repeater is located, or a device of a serving cell of a repeater, or a parent node of a repeater. The present disclosure does not limit the name of the repeater, as long as the device with said functions can be achieved, all are included in the scope of the repeater of the present disclosure.

In the embodiments of the present disclosure, a beam may also be expressed as a lobe, a reference signal (RS), a transmission configuration indication (TCI), or a spatial domain filter, etc.; or, may further be expressed as a beam index, a lobe index, a reference signal index, a transmission configuration indication index, or a spatial filter index, etc. The reference signal is e.g. a channel state information reference signal (CSI-RS), a sounding reference signal (SRS), an RS used for a repeater, or an RS transmitted by the repeater, etc. The TCI may further be expressed as a TCI state. Embodiments of the present disclosure are not limited to this.

### Embodiments of a first aspect

Embodiments of the present disclosure provide an indicating method for a repeater, which is described from a repeater side.

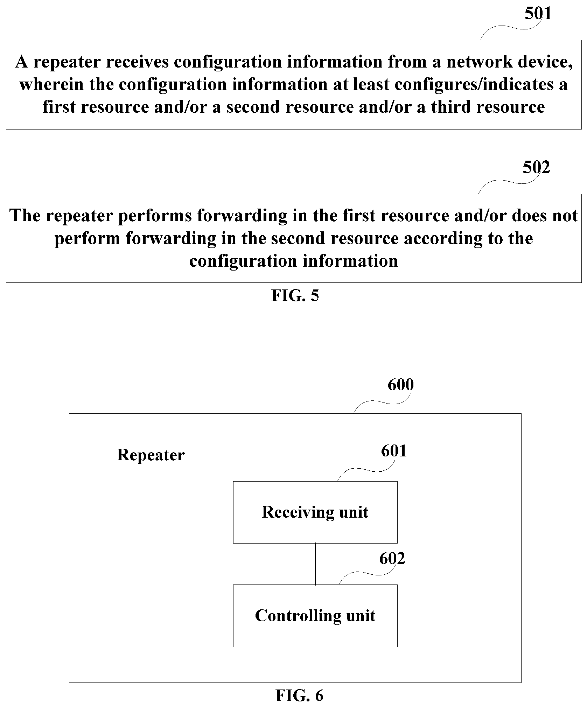

FIG. 5 is a schematic diagram of an indicating method for a repeater in the embodiments of the present disclosure. As shown in FIG. 5, the method includes:
501, a repeater receives configuration information from a network device, wherein the configuration information at least configures/indicates a first resource and/or a second resource and/or a third resource; and
502, the repeater performs forwarding in the first resource and/or does not perform forwarding in the second resource according to the configuration information.

It should be noted that the above FIG. 5 only schematically describes the embodiments of the present disclosure, but the present disclosure is not limited to this. For example, an execution step of each operation may be adjusted appropriately, moreover other some operations may be added or one or more operations may be removed. Persons skilled in the art may make appropriate modifications according to the above contents, not limited to the records in the above FIG. 5.

In the embodiments of the present disclosure, at least a part of the first resource and/or the second resource and/or the third resource may be configured and/or indicated by the configuration information, and/or, at least a part of the first resource and/or the second resource and/or the third resource may be predefined, or determined according to a predetermined rule. However, the present disclosure is not limited to this, for example, all resources may be configured and/or indicated by the configuration information, or, all resources may be predefined, or determined according to a predetermined rule.

In some embodiments, the network device may configure at least two of the first resource, the second resource and the third resource for the repeater. The first resource may be used for forwarding, and may be an available resource for forwarding (for example, called a hard resource or an ON resource). The second resource is not used for forwarding, and may be an unavailable resource for forwarding (for example, called a NA resource or an OFF resource). The third resource may be used for forwarding, and may be an undetermined resource for forwarding (for example, called a flexible resource or a soft resource). The present disclosure is not limited to this.

For example, the network device may support the first resource, the second resource and the third resource, and configures these three resources for the repeater at the time of configuring. For another example, the network device may support the first resource, the second resource and the third resource, but configures at least two of the resources for the repeater at the time of configuring. For a further example, the network device may support two resources of the first resource, the second resource and the third resource, and configures these two resources or one of them for the repeater at the time of configuring. The present disclosure is not limited to the above modes.

In some embodiments, the repeater is in an ON state or an available state or a hard state in the first resource. For example, the ON state is a standby state or a state in which forwarding is able to be performed. The standby state is a state that is off by default (default OFF) but in which forwarding is able to be performed upon receiving an indication. For example, the repeater may be in a forwarding state or may be not in a forwarding state. In the absence of the forwarding state, the repeater may quickly enter the forwarding state. For another example, the ON state is a state in which forwarding is performed. The repeater performs forwarding in the first resource.

In some embodiments, in the state in which forwarding is able to be performed, in a case where there is beam configuration (for example, an operating band of the repeater is located in FR2), at least a part of the first resource is configured with a beam for forwarding, for example, at least a part of the first resource of the repeater is configured with a corresponding beam. The repeater performs forwarding in the at least a part of the first resource by using the corresponding beam.

In some embodiments, in the state in which forwarding is able to be performed, in a case where there is not beam configuration (for example, an operating band of the repeater is located in FR1), a default beam and/or a fixed beam is/are used for forwarding. For example, at least a part of the first resource of the repeater corresponds to the default beam and/or the fixed beam. The repeater performs forwarding in the at least a part of the first resource by using the default beam and/or the fixed beam.

In some embodiments, in the state in which forwarding is performed, in a case where there is beam configuration (for example, an operating band of the repeater is located in FR2), all first resources of the repeater are configured with corresponding beams. The repeater performs forwarding in the first resources by using the corresponding beam.

In some embodiments, in the state in which forwarding is performed, in a case where there is not beam configuration (for example, an operating band of the repeater is located in FR1), all first resources of the repeater correspond to the default beam and/or the fixed beam. The repeater performs forwarding in the first resources by using the default beam and/or the fixed beam.

**In** the above description, "forwarding is able to be performed" may be considered as that the repeater has a capability of performing forwarding, and/or, the repeater may perform forwarding on the first resource, but the first resource is not actually necessarily used for forwarding. "forwarding is performed" may be considered as that the repeater is indicated to implement forwarding, or the repeater will implement a forwarding behavior, or the repeater may perform forwarding on the first resource, and/or, the first resource is actually used for forwarding. The above description is intended only to expound forwarding more clearly, and does not constitute a restriction on the present disclosure.

Moreover, in the context of the present disclosure, "ON state", "OFF state", "available state", "unavailable state", "hard state", "soft state" and "flexible state", etc. may be for the repeater, i.e., the repeater may in these states, or they may be for a resource, that is, the resource may in these states. Persons skilled in the art can understand specific meanings of these terms in the present disclosure.

**In** some embodiments, a time unit of the first resource corresponds to a forwarding beam. For example, each time unit has a corresponding forwarding beam. For another example, at least a part of the time units has/have corresponding beams. The above time unit may be one of a slot, a symbol, a subframe or a mini-slot or any combination thereof, the present disclosure is not limited to this.

For example, the forwarding beam is configured or indicated by the network device, or is determined according to a standard predefined rule, or is preset (for example, before delivery).

In some embodiments, the repeater uses the forwarding beam in an ON state to which the first resource corresponds. For example, the forwarding beam is a beam on a backhaul (BH) link and/or a beam on an access (AC) link.

For example, the repeater uses the beam on the backhaul (BH) link to receive a communication signal from the network device, and/or the repeater uses the beam on the backhaul (BH) link to transmit a communication signal to the network device.

For example, the repeater uses the beam on the access (AC) link to receive a forwarding signal from the network device, and/or the repeater uses the beam on the access (AC) link to transmit a forwarding signal to the network device.

In some embodiments, a forwarding beam to which at least a part or all of the first resource correspond is configured by semi-static signaling. The semi-static signaling e.g., is radio resource control (RRC) signaling, a MAC CE, etc.

In some embodiments, the first resource and/or the forwarding beam is/are configured by semi-static signaling. The first resource and the forwarding beam may be configured by a same signaling, or, the first resource and the forwarding beam may further be configured by different signaling.

In some embodiments, the first resource has a highest priority.

In some embodiments, a beam indication of the first resource may only be reconfigured and is unable to be overridden.

For example, if the first resource is configured as a hard resource (ON resource) by a semi-static signaling, the first resource is able to be reconfigured as a soft resource (flexible resource) or unavailable resource (OFF resource) by another same semi-static signaling, or be cancelled/erased/removed.

For another example, if the forwarding beam corresponding to the first resource is configured and/or indicated by semi-static signaling, the forwarding beam is able to be reconfigured with a same forwarding beam by another same semi-static signaling, or, the forwarding beam is able to be reconfigured with a different forwarding beam by another same semi-static signaling, or the forwarding beam is cancelled/erased/removed by another same semi-static signaling. Optionally, the forward beam is unable to be overridden by other signaling (such as a DCI signaling or another semi-static signaling). That is, the repeater does not expect to receive another signaling indicating and/or configuring another forwarding beam for the first resource, and/or, the network device will not transmit another signaling indicating and/or configuring another forwarding beam for the first resource.

In some embodiments, the network device indicates the first resource via first signaling, and configures a first beam for the first resource via second signaling.

For example, the first signaling indicates at least one of the following of the first resource or any combination thereof: a starting position, an offset, a period, or an ending position; the present disclosure is not limited to this, it may further indicate other attributes of the first resource.

In some embodiments, the second signaling indicates the first beam, and/or, the second signaling indicates a time domain resource to which the first beam corresponds.

For example, the second signaling may directly indicate the first beam, or may further directly indicate a time domain resource to which the first beam corresponds, or may further indicate the first beam and a time domain resource to which the first beam corresponds simultaneously.

In some embodiments, the first resource partially overlaps the time domain resource to which the first beam corresponds, or, the first resource completely overlaps (coincides) the time domain resource to which the first beam corresponds, or, the first resource at least includes the time domain resource to which the first beam corresponds.

In some embodiments, the first resource is able to be reconfigured by another first signaling.

For example, if the first resource is configured as a hard resource (ON resource) by a semi-static signaling (RRC signaling), the first resource may further be able to be reconfigured as a soft resource (flexible resource) or unavailable resource (OFF resource) or hard resource (ON resource) by another same semi-static signaling (RRC signaling).

In some embodiments, the first beam is able to be reconfigured only by another second signaling and is unable to be overridden by other signaling.

For example, if the first beam is configured by a semi-static signaling (RRC signaling), the first beam may only be reconfigured by another same semi-static signaling (RRC signaling) and is unable to be reconfigured by other signaling (other RRC signaling or DCI or MAC CE).

In some embodiments, the first signaling and the second signaling are the same signaling.

For example, the first signaling indicates the first resource for the repeater, and the first signaling further indicates the first beam to which at least a part of the first resource or all the resources corresponds.

For another example, the second signaling indicates the first beam for the repeater, and the time frequency resource to which the first beam corresponds is a first resource.

In some embodiments, the first signaling and the second signaling are different signaling.

Thereby, the network device configures for the repeater the first resource that is unable to be overridden by other signaling (for example overrides a resource or overrides a forwarding beam to which the first resource corresponds), which may ensure stability of performing forwarding by using the first resource and the corresponding forwarding beam, thereby reducing unnecessary misunderstanding between the network device and the repeater, and avoiding forwarding error caused by misunderstanding and a resulting impact on network performance.

For example, the signal forwarded in the first resource may be an important signal that requires higher stability, such as a common signal for a terminal equipment to perform initial access, SSB, SIB, CORESET 0 and/or RACH occasion, a reference signal such as a CSI-RS, etc.

The above text schematically describes the first resource or the ON state, etc. The following text describes the second resource or the unavailable state.

In some embodiments, the repeater is in an OFF state or unavailable state in the second resource.

For example, the repeater does not forward a signal in the second resource.

For another example, the repeater does not expect to receive signaling for dynamic indicating forwarding and associated with the second resource, and/or, the repeater does not expect to receive signaling for configuring/indicating forwarding and associated with the second resource, and/or, the repeater does not expect to receive signaling configuring/indicating a forwarding beam in the second resource, and/or, the repeater does not expect to receive a forwarding signal in the second resource.

For a further example, the network device does not transmit or receive a forwarding signal in the second resource, and/or, the network device does not transmit signaling for dynamic indicating forwarding and associated with the second resource, and/or, the network device does not transmit signaling for configuring/indicating forwarding and associated with the second resource, and/or, the network device does not transmit signaling configuring/indicating a forwarding beam in the second resource.

In some embodiments, the second resource is configured via third signaling.

For example, the third signaling indicating at least one of the following of the second resource or any combination thereof: a starting position, an offset, a period, or an ending position; the present disclosure is not limited to this, for example it may further indicate other attributes of the second resource.

In some embodiments, the second resource is able to be reconfigured by another third signaling.

For example, if the second resource is configured as an unavailable resource (OFF resource) by a semi-static signaling (RRC signaling), the second resource is able to be reconfigured as a soft resource (flexible resource) or hard resource (ON resource) or unavailable resource (OFF resource) by another same semi-static signaling (RRC signaling).

In some embodiments, the third signaling and the first signaling are the same signaling.

For example, the network device may indicate to the repeater a first resource in an ON state and a second resource in an OFF state via a signaling (such as first signaling).

In some embodiments, the third signaling, the first signaling and the second signaling are the same signaling.

For example, the network device may indicate for the repeater a first beam, a time domain resource corresponding to the first beam, i.e. a first resource, a second resource in an OFF state, via a signaling (such as second signaling).

For another example, the network device may indicate for the repeater a first resource, a second resource, first beams corresponding to all or at least a part of first resources, via a signaling (such as first signaling).

In some embodiments, the second resource is a remaining resource other than the first resource and the third resource.

For example, the network device may configure the first resource (ON resource) and the third resource (flexible resource) for the repeater, and in the absence of an explicit indication to the second resource, other resource other than the first resource and the third resource is the second resource.

In the embodiments of the present disclosure, the repeater in the OFF state does not perform forwarding (or a forwarding module of the repeater does not perform forwarding). For example, that the repeater does not perform forwarding means not doing at least one of the following:
-- receiving a signal from a base station, on a BH link;
-- transmitting an amplified signal received on the BH link, on an AC link;
-- receiving a signal on the AC link;
-- transmitting an amplified signal received on the AC link, on the BH link.

Thereby, the network device configures for the repeater a second resource in the OFF or unavailable state, which may ensure that the repeater does not need to perform forwarding during the time when the second resource is located, thereby some functions of the repeater are turned off appropriately to achieve the purpose of saving electricity. By doing so, energy overhead of the repeater may be reduced, and energy overhead of the entire network may also be reduced, to better achieve low-carbon environmental protection.

The above text schematically describes the second resource or the OFF state, etc. The following text describes the third resource or the flexible state.

In some embodiments, the repeater is in a flexible state or a soft state in the third resource.

In some embodiments, the third resource is a remaining resource other than the first resource and the second resource.

For example, the network device may configure the first resource (ON resource) and the second resource (OFF resource) for the repeater, and in the absence of an explicit indication to the third resource, other resource other than the first resource and the second resource is the third resource.

In some embodiments, the third resource is configured via fourth signaling.

For example, the network device may explicitly indicate the third resource via the fourth signaling. The fourth signaling indicates at least one of the following of the third resource or any combination thereof: a starting position, an offset, a period, or an ending position; the present disclosure is not limited to this, it may further indicate other attributes of the third resource.

In some embodiments, the fourth signaling and the first signaling are the same signaling.

For example, the network device may indicate for the repeater a first resource and a third resource via a signaling (such as first signaling).

In some embodiments, the fourth signaling, the first signaling and the third signaling are the same signaling.

For example, the network device may indicate for the repeater a first resource, a second resource and a third resource via a signaling (such as first signaling).

In some embodiments, the fourth signaling and the second signaling are the same signaling.

For example, the network device may indicate for the repeater a first beam and a third resource via a signaling (such as second signaling).

In some embodiments, the fourth signaling and the third signaling are the same signaling.

For example, the network device may indicate for the repeater a second resource and a third resource via a signaling (such as third signaling).

In some embodiments, a second beam to which at least a part of the third resource corresponds is configured/indicated via semi-static fifth signaling, and/or, a third beam to which at least a part of the third resource corresponds is configured/indicated via dynamic sixth signaling.

In some embodiments, the second beam indicated by the fifth signaling is able to be overridden by the third beam indicated by the sixth signaling. That is, when a time domain resource corresponding to the second beam overlaps at least partially with a time domain resource corresponding to the third beam, the repeater determines that in the at least partially overlapped time domain resource, forwarding is performed using the third beam. That is, the sixth signaling has a higher priority than the fifth signaling, and/or, the third beam has a higher priority than the second beam, and/or, a third time domain resource corresponding to the third beam has a higher priority than a third time domain resource corresponding to the second beam.

In some embodiments, a beam to which the third resource corresponds is determined according to a priority of the fifth signaling and/or the sixth signaling. For example, a priority of the signaling, and/or, a priority of a beam indicated by the signaling, and/or, a priority of a time domain resource indicated by the signaling is/are explicitly indicated in the fifth signaling and the sixth signaling.

In some embodiments, the time domain resource(s) to which the second beam indicated by the fifth signaling and/or the third beam indicated by the sixth signaling corresponds is/are able to be indicated as being OFF by a seventh signaling.

For example, a time domain resource indicated as OFF is not used for forwarding, or, a time domain resource indicated as OFF is in an OFF state or unavailable state.

In some embodiments, the second beam indicated by the fifth signaling is able to be indicated as being OFF, and/or, the time domain resource to which the third beam indicated by the sixth signaling corresponds is unable to be indicated as being OFF.

In some embodiments, the second beam indicated by the fifth signaling is able to be reconfigured by another fifth signaling.

In some embodiments, the seventh signaling and the sixth signaling are the same signaling.

In some embodiments, the sixth signaling indicates a forwarding beam via a value of a beam index. The seventh signaling indicates OFF via a special value of a beam index and/or other field. For example, OFF is indicated via a special value of a beam index, the special value is pre-agreed or pre-configured by the network device and the repeater, or predefined by standard.

In some embodiments, whether the time domain resource to which the second beam indicated by the fifth signaling and/or the third beam indicated by the sixth signaling corresponds is able to be indicated as being OFF is determined according to a priority.

For example, a priority of dynamic signaling is higher than that of semi-static signaling.

In some embodiments, in a case where a priority is explicitly indicated, whether a time domain resource is able to be indicated as OFF is determined according to the priority.

For example, in a case where explicitly indicated priorities are identical, a priority of dynamic signaling is higher than that of semi-static signaling. For another example, in a case where explicitly indicated priorities are identical, the repeater determines whether a time domain resource is able to be indicated as OFF.

Thereby, the network device configures for the repeater the third resource in the flexible state or soft state, which may increase flexibility of forwarding scheduling, reduce interference when there is no forwarding demand so that the repeater does not perform forwarding, and improve the efficiency of forwarding.

In some embodiments, the repeater may only support two resources, for example the network device may configure two of the first resource, the second resource and the third resource for the repeater.

For example, the network device may indicate for the repeater a first resource and a third resource via a signaling (such as first signaling). For another example, the network device may indicate for the repeater a first resource via a signaling (such as first signaling) and indicate for the repeater a third resource via another signaling (such as fourth signaling). The above text describes the third resource or the flexible state, and the following text describes priorities in the present application.

In some embodiments, a priority of forwarding may be at least one of or a combination of the following priorities:
-- a priority of a forwarding beam corresponding to the forwarding;
-- a priority of a configuration corresponding to the forwarding;
-- a priority of signaling that carries a configuration corresponding to the forwarding;
-- a priority of a time-domain resource related to the forwarding;
-- a priority of a forwarding signal of the forwarding, etc.

In some embodiments, a priority of semi-static signaling is higher than a priority of dynamic signaling, or, a priority of signaling received later is higher than a priority of signaling received earlier, or, a priority of dynamic signaling is higher than a priority of semi-static signaling.

In some embodiments, it may be expressed as a priority of a beam: a priority of some beams is higher than that of some other beams.

For example, a beam used to forward certain signals has a high priority. For example, a beam used to forward a signal with a high priority such as an SSB has a high priority.

For another example, a priority of some beams configured by a network side is high, for example, specifying some beam scheduling indexes; or, the network side configures or indicates a priority of one beam.

For a further example, it is agreed in advance that a beam indicated by certain signaling has a high priority, for example a beam configured by an OAM has a high priority, and/or, a semi-statically indicated beam has a high priority, and/or, a dynamically indicated beam has a high priority.

In some embodiments, it may be expressed as a priority of a forwarding signal: the forwarding signal itself has a priority.

For example, a signal that may have a high priority includes at least one of the following: SS, SSB, SIB, MIB, RACH, PDCCH for scheduling Msg2 and/or Msg3 and/or Msg4 and/or Msg5, PDSCH for carrying Msg2 and/or Msg4, PUSCH for carrying Msg3 and/or Msg5, CSI-RS, SRS, etc. Of course, it may further be a signal other than the above signals, the present disclosure is not limited to this.

For another example, a signal for reporting beam failure report (BFR) of a terminal equipment served by the NCR may also have a higher priority. In this way, the network side timely receives BFR of a terminal side and performs appropriate processing, to prevent further larger link failure, etc.

For a further example, a signal priority is indicated by the network side.

In some embodiments, it may be expressed as a priority of indication/configuration information and signaling.

For example, a beam configured by an OAM has a high priority, and/or, a semi-statically indicated beam has a high priority, and/or, a dynamically indicated beam has a high priority.

For another example, most of the important signals in the above examples are related to key processes and capabilities such as initial access, channel tracking, and channel measurement of a served terminal equipment. Therefore, semi-static signaling or signaling configured by the OAM may have a higher priority.

For a further example, when a terminal equipment served by NCR has service that requires higher reliability and delay, a network side may transmit dynamic signaling to indicate a new transmission beam for the NCR. In this situation, the priority may be divided into three categories, for example, a beam used to forward an SSB and so on has the highest priority, a priority of indication for dynamic rewriting is the second, and a priority of other indications is lower.

In some embodiments, it may be expressed as a priority of a forwarding direction: the forwarding signal itself has a priority.

For example, a beam conflict may occur between uplink forwarding and downlink forwarding. A downlink forwarding beam may take precedence, a network side has a higher priority in communication, which may guarantee services of more terminal equipments served by the network device.

For another example, in a beam forwarding direction conflict, an uplink forwarding beam may take precedence, so that the network side timely obtains information requested or reported by a terminal equipment served by the NCR.

In some embodiments, it may be expressed as a priority of a time unit/time period used or forwarded by this beam.

For example, NCR may determine (according to a received indication, or system information acquired by itself) when more important signals may need to be forwarded, these times or time periods have a higher priority, and beams related to these times or time periods have a higher priority in a beam conflict.

The above text only schematically describes priorities, however the present disclosure is not limited to this.

Each of the above embodiments is only illustrative for the present disclosure, but the present disclosure is not limited to this, appropriate modifications may be further made based on the above each embodiment. For example, each of the above embodiments may be used individually, or one or more of the above embodiments may be combined.

According to the embodiments of the present disclosure, a repeater receives configuration information from a network device, wherein the configuration information at least configures/indicates a first resource and/or a second resource and/or a third resource. Thereby, the repeater is capable of performing forwarding or not performing forwarding according to the configuration information, which can thus reduce unnecessary interference and improve transmission efficiency of the entire network.

### Embodiments of a second aspect

Embodiments of the present disclosure provide a repeater, the repeater may be e.g. the aforementioned NCR, or may be a network device or a terminal equipment having a forwarding function, or may be one or more parts or components configured in the NCR, the network device or the terminal equipment.

FIG. 6 is a schematic diagram of a repeater in the embodiments of the present disclosure. The principle of the repeater to solve a problem is the same as the method in the embodiments of the first aspect, thus its specific implementation may refer to the embodiments of the first aspect, the same contents will not be repeated.

As shown in FIG. 6, a repeater 600 in the embodiments of the present disclosure includes:
a receiving unit 601, configured to receive configuration information from a network device, wherein the configuration information at least configures/indicates a first resource and/or a second resource and/or a third resource; and
a controlling unit 602, configured to perform forwarding in the first resource and/or not to perform forwarding in the second resource according to the configuration information.

In some embodiments, the repeater is in an ON state or an available state or a hard state in the first resource.

In some embodiments, the ON state is a standby state or a state in which forwarding is able to be performed.

In some embodiments, the standby state is a state that is off by default (default OFF) but in which forwarding is able to be performed upon receiving an indication.

In some embodiments, in the state in which forwarding is able to be performed, in a case where there is beam configuration, at least a part of the first resource being configured with a beam for forwarding, and in a case where there is no beam configuration, at least a part of the first resource corresponding to a default beam and/or a fixed beam.

In some embodiments, at least one time unit of the first resource corresponds to a forwarding beam.

In some embodiments, the forwarding beam is configured or indicated by the network device, or is determined according to a standard predefined rule, or is preset.

In some embodiments, the repeater uses the forwarding beam in an ON state to which the first resource corresponds.

In some embodiments, the forwarding beam is a beam on a backhaul (BH) link and/or a beam on an access (AC) link.

In some embodiments, the repeater uses the beam on the backhaul (BH) link to receive a communication signal from the network device, and/or the repeater uses the beam on the backhaul (BH) link to transmit a communication signal to the network device.

In some embodiments, the repeater uses the beam on the access (AC) link to receive a forwarding signal from the network device, and/or the repeater uses the beam on the access (AC) link to transmit a forwarding signal to the network device.

In some embodiments, a forwarding beam to which a part or all of the first resource correspond is configured by semi-static signaling.

In some embodiments, the first resource and/or the forwarding beam is/are configured by semi-static signaling.

In some embodiments, the first resource has a highest priority.

In some embodiments, a beam indication of the first resource may only be reconfigured and is unable to be overridden.

In some embodiments, the network device indicates the first resource via first signaling, and configures a first beam for the first resource via second signaling.

In some embodiments, the first signaling indicates at least one of the following of the first resource or any combination thereof: a starting position, an offset, a period, or an ending position.

In some embodiments, the second signaling indicates the first beam and/or a time domain resource to which the first beam corresponds.

In some embodiments, the first resource partially overlaps the time domain resource to which the first beam corresponds, or, the first resource completely overlaps (coincides) the time domain resource to which the first beam corresponds, or, the first resource at least includes the time domain resource to which the first beam corresponds.

In some embodiments, the first resource is able to be reconfigured by another first signaling.

In some embodiments, the first beam is able to be reconfigured only by another second signaling and is unable to be overridden by other signaling.

In some embodiments, the first signaling and the second signaling are the same signaling. In some embodiments, the first signaling and the second signaling are different signaling.

In some embodiments, the repeater is in an OFF state or unavailable state at the second resource.

In some embodiments, the repeater does not expect to receive signaling for dynamic indicating forwarding and associated with the second resource, and/or, the repeater does not expect to receive signaling for configuring/indicating forwarding and associated with the second resource, and/or, the repeater does not expect to receive signaling configuring/indicating a forwarding beam in the second resource, and/or, the repeater does not expect to receive a forwarding signal in the second resource.

In some embodiments, the network device does not transmit or receive a forwarding signal om the second resource, and/or, the network device does not transmit signaling for dynamic indicating forwarding and associated with the second resource, and/or, the network device does not transmit signaling for configuring/indicating forwarding and associated with the second resource, and/or, the network device does not transmit signaling configuring/indicating a forwarding beam in the second resource.

In some embodiments, the second resource is configured via third signaling.

In some embodiments, the third signaling indicating at least one of the following of the second resource or any combination thereof: a starting position, an offset, a period, or an ending position.

In some embodiments, the second resource is able to be reconfigured by another third signaling.

In some embodiments, the third signaling and the first signaling are the same signaling.

In some embodiments, the third signaling, the first signaling and the second signaling are the same signaling.

In some embodiments, the second resource is a remaining resource other than the first resource and the third resource.

In some embodiments, the repeater is in a flexible state or a soft state in the third resource.

In some embodiments, the third resource is a remaining resource other than the first resource and the second resource.

In some embodiments, the third resource is configured via fourth signaling.

In some embodiments, the fourth signaling indicating at least one of the following of the third resource or any combination thereof: a starting position, an offset, a period, or an ending position.

In some embodiments, the fourth signaling and the first signaling are the same signaling.

In some embodiments, the fourth signaling, the first signaling and the third signaling are the same signaling.

In some embodiments, the fourth signaling and the second signaling are the same signaling.

In some embodiments, the fourth signaling and the third signaling are the same signaling.

In some embodiments, a second beam to which at least a part of the third resource corresponds is configured/indicated via semi-static fifth signaling, and/or, a third beam to which at least a part of the third resource corresponds is configured/indicated via dynamic sixth signaling.

In some embodiments, the second beam indicated by the fifth signaling is able to be overridden by the third beam indicated by the sixth signaling.

In some embodiments, a beam to which the third resource corresponds is determined according to a priority of the fifth signaling and/or the sixth signaling.

In some embodiments, the time domain resource(s) to which the second beam indicated by the fifth signaling and/or the third beam indicated by the sixth signaling corresponds is/are able to be indicated as being OFF by the seventh signaling.

In some embodiments, a time domain resource indicated as OFF is not used for forwarding, or, a time domain resource indicated as OFF is in an OFF state or unavailable state.

In some embodiments, the second beam indicated by the fifth signaling is able to be indicated as being OFF, and/or, the time domain resource to which the third beam indicated by the sixth signaling corresponds is unable to be indicated as being OFF.

In some embodiments, the second beam indicated by the fifth signaling is able to be reconfigured by another fifth signaling.

In some embodiments, the seventh signaling and the sixth signaling are the same signaling.

In some embodiments, the sixth signaling indicates a forwarding beam via a value of a beam index, and the seventh signaling indicates OFF via a value of a beam index.

In some embodiments, whether the time domain resource(s) to which the second beam indicated by the fifth signaling and/or the third beam indicated by the sixth signaling corresponds is/are able to be indicated as being OFF is determined according to a priority.

In some embodiments, a priority of dynamic signaling is higher than that of semi-static signaling.

In some embodiments, in a case where a priority is explicitly indicated, whether a time domain resource is able to be indicated as OFF is determined according to the priority.

In some embodiments, in a case where explicitly indicated priorities are identical, a priority of dynamic signaling is higher than that of semi-static signaling.

In some embodiments, in a case where explicitly indicated priorities are identical, the repeater determines whether a time domain resource is able to be indicated as OFF.

Moreover, for the sake of simplicity, FIG. 6 only exemplarily shows a connection relationship or signal direction between components or modules, however persons skilled in the art should know that various relevant technologies such as bus connection may be used. The above components or modules may be realized by a hardware facility such as a processor, a memory, a transmitter, a receiver, etc. The embodiments of the present disclosure have no limitation to this.

Each of the above embodiments is only illustrative for the present disclosure, but the present disclosure is not limited to this, appropriate modifications may be further made based on the above each embodiment. For example, each of the above embodiments may be used individually, or one or more of the above embodiments may be combined.

According to the embodiments of the present disclosure, a repeater receives configuration information from a network device, wherein the configuration information at least configures/indicates a first resource and/or a second resource and/or a third resource. Thereby, the repeater is capable of performing forwarding or not performing forwarding according to the configuration information, which can thus reduce unnecessary interference and improve transmission efficiency of the entire network.

### Embodiments of a third aspect

Embodiments of the present disclosure provide an indicating method for a repeater, which is described from a network device side, the contents same as the embodiments of the first aspect are not repeated.

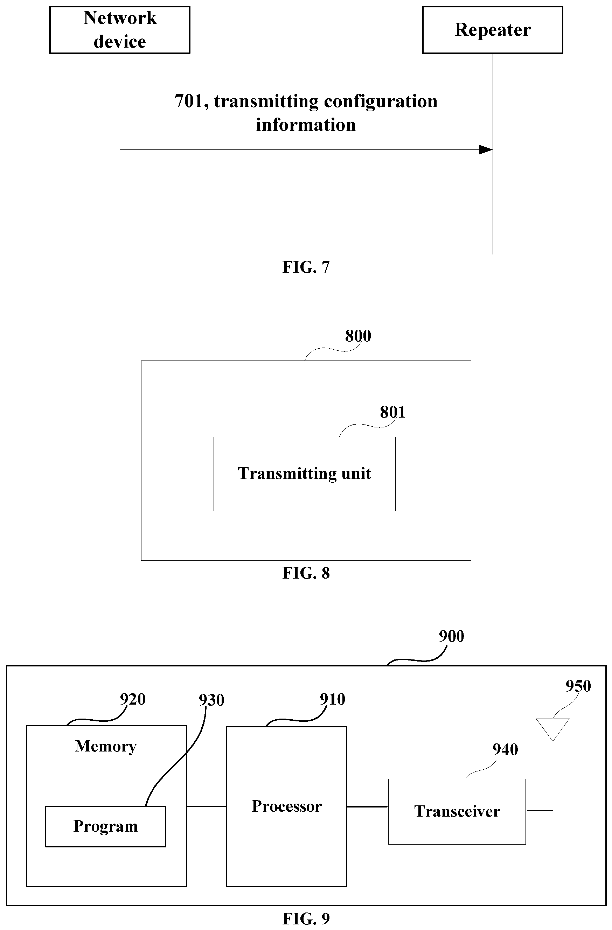

FIG. 7 is a schematic diagram of an indicating method for a repeater in the embodiments of the present disclosure. As shown in FIG. 7, the method includes:
701, a network device transmits configuration information to a repeater;
wherein the configuration information at least configures/indicates a first resource and/or a second resource and/or a third resource, and the configuration information is used by the repeater to determine to perform forwarding at the first resource and/or not to perform forwarding at the second resource.

It should be noted that the above FIG. 7 only schematically describes the embodiments of the present disclosure, but the present disclosure is not limited to this. For example, an execution step of each operation may be adjusted appropriately, moreover other some operations may be increased or reduced. Persons skilled in the art may make appropriate modifications according to the above contents, not limited to the records in the above FIG. 7.

The above only describes each step or process related to the present disclosure, but the present disclosure is not limited to this. The method in the embodiments of the present disclosure may further comprise other steps or processes. For specific contents of these steps or processes, relevant technologies may be referred to.

Each of the above embodiments is only illustrative for the present disclosure, but the present disclosure is not limited to this, appropriate modifications may be further made based on the above each embodiment. For example, each of the above embodiments may be used individually, or one or more of the above embodiments may be combined.

According to the embodiments of the present disclosure, a repeater receives configuration information from a network device, wherein the configuration information at least configures/indicates a first resource and/or a second resource and/or a third resource. Thereby, the repeater is capable of performing forwarding or not performing forwarding according to the configuration information, which can thus reduce unnecessary interference and improve transmission efficiency of the entire network.

### Embodiments of a fourth aspect

Embodiments of the present disclosure provide a network device.

FIG. 8 is a schematic diagram of a network device in the embodiments of the present disclosure. The principle of the network device to solve a problem is the same as the method in the embodiments of the third aspect, thus its specific implementation can refer to the embodiments of the third aspect, the same contents will not be repeated.

As shown in FIG. 8, the network device 800 in the embodiments of the present disclosure includes:
a transmitting unit 801, configured to transmit configuration information to a repeater;
wherein the configuration information at least configures/indicates a first resource and/or a second resource and/or a third resource, and the configuration information is used by the repeater to determine to perform forwarding in the first resource and/or not to perform forwarding in the second resource.

In some embodiments, the network device may transmit a forwarding signal to the repeater (for example, a destination is a terminal equipment, forwarded by the repeater) and/or a communication signal (for example, the destination is the repeater), or, the network device may further receive a forwarding signal from the repeater (for example, generated and transmitted by the terminal equipment, and forwarded by the repeater) and/or a communication signal (for example, generated and transmitted by the repeater).

It's worth noting that the above only describes components or modules related to the present disclosure, but the present disclosure is not limited to this. The network device 800 in the embodiments of the present disclosure may further include other components or modules. For detailed contents of these components or modules, relevant technologies can be referred to.

Moreover, for the sake of simplicity, FIG. 8 only exemplarily shows a connection relationship or signal direction between components or modules, however persons skilled in the art should know that various relevant technologies such as bus connection may be used. The above components or modules may be realized by a hardware facility such as a processor, a memory, a transmitter, a receiver, etc. The embodiments of the present disclosure have no limitation to this.

Each of the above embodiments is only illustrative for the present disclosure, but the present disclosure is not limited to this, appropriate modifications may be further made based on the above each embodiment. For example, each of the above embodiments may be used individually, or one or more of the above embodiments may be combined.

According to the embodiments of the present disclosure, a repeater receives configuration information from a network device, wherein the configuration information at least configures/indicates a first resource and/or a second resource and/or a third resource. Thereby, the repeater is capable of performing forwarding or not performing forwarding according to the configuration information, which can thus reduce unnecessary interference and improve transmission efficiency of the entire network.

### Embodiments of a fifth aspect

Embodiments of the present disclosure provides a communication system. FIG. 1 is a schematic diagram of a communication system in the embodiments of the present disclosure. As shown in FIG. 1, the communication system 100 includes a network device 101, a repeater 102 and a terminal equipment 103. For the sake of simplicity, FIG. 1 only takes a network device, a repeater and a terminal equipment as examples to describe, but the embodiments of the present disclosure are not limited to this.

In the embodiments of the present disclosure, transmission of existing or further implementable services can be carried out between the network device 101 and the terminal equipment 103. For example, these services may include but be not limited to: enhanced Mobile Broadband (eMBB), massive Machine Type Communication (mMTC), Ultra-Reliable Low-Latency Communication (URLLC), Internet of Vehicles (V2X) communication and so on. The repeater 102 is configured to perform the indicating method for a repeater as described in the embodiments of the first aspect, and the network device 101 is configured to perform the indicating method for a repeater as described in the embodiments of the third aspect, their contents are incorporated here and are not repeated here.

Embodiments of the present disclosure further provide an electronic device, the electronic device e.g. is a repeater or a network device.

FIG. 9 is a schematic diagram of composition of an electronic device in the embodiments of the present disclosure. As shown in FIG. 9, the electronic device 900 may include: a processor 910 (such as a central processing unit (CPU)) and a memory 920; the memory 920 is coupled to the processor 910. The memory 920 may store various data; moreover, further stores a program 930 for information processing, and executes the program 930 under the control of the processor 910.

For example, the processor 910 may be configured to execute a program to implement the indicating method for a repeater as described in the embodiments of the first aspect. For example, the processor 901 may be configured to perform the following control: receiving configuration information from a network device, wherein the configuration information at least configures/indicates a first resource and/or a second resource and/or a third resource; and performing forwarding in the first resource and/or not performing forwarding in the second resource according to the configuration information.

For another example, the processor 910 may be configured to execute a program to implement the indicating method for a repeater as described in the embodiments of the third aspect. For example, the processor 901 may be configured to perform the following control: transmitting configuration information a repeater, wherein the configuration information at least configures/indicates a first resource and/or a second resource and/or a third resource, and the configuration information is used by the repeater to determine to perform forwarding in the first resource and/or not to perform forwarding in the second resource.

In addition, as shown in FIG. 9, the electronic device 900 may further include: a transceiver 940 and an antenna 950, etc.; wherein the functions of said components are similar to relevant arts, which are not repeated here. It's worth noting that the electronic device 900 does not have to include all the components shown in FIG. 9. Moreover, the electronic device 900 may also include components not shown in FIG. 9, relevant arts may be referred to.

Embodiments of the present disclosure further provide a computer readable program, wherein when the program is executed in a repeater, the program enables a computer to execute the indicating method for a repeater as described in the embodiments of the first aspect, in the repeater.

Embodiments of the present disclosure further provide a storage medium in which a computer readable program is stored, wherein the computer readable program enables a computer to execute the indicating method for a repeater as described in the embodiments of the first aspect, in a repeater.

Embodiments of the present disclosure further provide a computer readable program, wherein when a network device executes the program, the program enables a computer in the network device to execute the indicating method for a repeater as described in the embodiments of the third aspect.

Embodiments of the present disclosure further provide a storage medium in which a computer readable program is stored, wherein the computer readable program enables a computer to execute the indicating method for a repeater as described in the embodiments of the third aspect, in a network device.

The apparatus and method in the present disclosure may be realized by hardware, or may be realized by combining hardware with software. The present disclosure relates to such a computer readable program, when the program is executed by a logic component, the computer readable program enables the logic component to realize the device described in the above text or a constituent component, or enables the logic component to realize various methods or steps described in the above text. The logic component is e.g. a field programmable logic component, a microprocessor, a processor used in a computer, etc. The present disclosure further relates to a storage medium storing the program, such as a hard disk, a magnetic disk, an optical disk, a DVD, a flash memory and the like.

By combining with the method/device described in the embodiments of the present disclosure, it may be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules may be realized by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module may be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module may be stored in the MEGA-SIM card or the flash memory apparatus with a large capacity.

One or more in the functional block diagram or one or more combinations in the functional block diagram as described in the drawings may be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings may further be implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art may make various variations and modifications to the present disclosure according to the spirit and principle of the present disclosure, these variations and modifications are also within the scope of the present disclosure.

Regarding the above implementations disclosed in this embodiment, the following supplements are further disclosed:
1. An indicating method for a repeater, including:
   a repeater receives configuration information from a network device, wherein the configuration information at least configures/indicates a first resource and/or a second resource and/or a third resource; and
   the repeater performs forwarding in the first resource and/or does not perform forwarding in the second resource according to the configuration information.
2. The method according to Supplement 1, wherein the repeater is in an ON state or an available state or a hard state in the first resource.
3. The method according to Supplement 2, wherein the ON state is a standby state or a state in which forwarding is able to be performed.
4. The method according to Supplement 3, wherein the standby state is a state that is off by default (default OFF) but in which forwarding is able to be performed upon receiving an indication.
5. The method according to Supplement 3, wherein in the state in which forwarding is able to be performed, in a case where there is beam configuration, at least a part of the first resource being configured with a beam for forwarding, and in a case where there is no beam configuration, at least a part of the first resource corresponding to a default beam and/or a fixed beam.
6. The method according to any one of Supplements 1 to 5, wherein at least one time unit of the first resource corresponds to a forwarding beam.
7. The method according to Supplement 6, wherein the forwarding beam is configured or indicated by the network device, or is determined according to a standard predefined rule, or is preset.
8. The method according to Supplement 6, wherein the repeater uses the forwarding beam in an ON state to which the first resource corresponds.
9. The method according to any one of Supplements 6 to 8, wherein the forwarding beam is a beam on a backhaul (BH) link and/or a beam on an access (AC) link.
10. The method according to Supplement 9, wherein the repeater uses the beam on the backhaul (BH) link to receive a communication signal from the network device, and/or the repeater uses the beam on the backhaul (BH) link to transmit a communication signal to the network device.
11. The method according to Supplement 9, wherein the repeater uses the beam on the access (AC) link to receive a forwarding signal from the network device, and/or the repeater uses the beam on the access (AC) link to transmit a forwarding signal to the network device.
12. The method according to any one of Supplements 6 to 8, wherein a forwarding beam to which a part or all of the first resource correspond is configured by semi-static signaling.
13. The method according to any one of Supplements 6 to 8, wherein the first resource and/or the forwarding beam is/are configured by semi-static signaling.
14. The method according to any one of Supplements 1 to 13, wherein the first resource has the highest priority.
15. The method according to any one of Supplements 1 to 14, wherein a beam indication of the first resource may only be reconfigured and is unable to be overridden.
16. The method according to any one of Supplements 1 to 14, wherein the network device indicates the first resource via first signaling, and configures a first beam for the first resource via second signaling.
17. The method according to Supplement 16, wherein the first signaling indicates at least one of the following of the first resource or any combination thereof: a starting position, an offset, a period, or an ending position.
18. The method according to Supplement 16, wherein the second signaling indicates the first beam and/or a time domain resource to which the first beam corresponds.
19. The method according to Supplement 18, wherein the first resource partially overlaps the time domain resource to which the first beam corresponds, or, the first resource completely overlaps (coincides) the time domain resource to which the first beam corresponds, or, the first resource at least includes the time domain resource to which the first beam corresponds.
20. The method according to any one of Supplements 16 to 19, wherein the first resource is able to be reconfigured by another first signaling.
21. The method according to any one of Supplements 16 to 19, wherein the first beam is able to be reconfigured only by another second signaling and is unable to be overridden by other signaling.
22. The method according to any one of Supplements 16 to 21, wherein the first signaling and the second signaling are the same signaling.
23. The method according to any one of Supplements 16 to 21, wherein the first signaling and the second signaling are different signaling.
24. The method according to any one of Supplements 1 to 23, wherein the repeater is in an OFF state or unavailable state in the second resource.
25. The method according to Supplement 24, wherein the repeater does not expect to receive signaling for dynamic indicating forwarding and associated with the second resource, and/or, the repeater does not expect to receive signaling for configuring/indicating forwarding and associated with the second resource, and/or, the repeater does not expect to receive signaling configuring/indicating a forwarding beam and associated with the second resource, and/or, the repeater does not expect to receive a forwarding signal in the second resource.
26. The method according to Supplement 24, wherein the network device does not transmit or receive a forwarding signal in the second resource, and/or, the network device does not transmit signaling for dynamic indicating forwarding and associated with the second resource, and/or, the network device does not transmit signaling for configuring/indicating forwarding and associated with the second resource, and/or, the network device does not transmit signaling configuring/indicating a forwarding beam in the second resource.
27. The method according to any one of Supplements 1 to 26, wherein the second resource is configured via third signaling.
28. The method according to Supplement 27, wherein the third signaling indicating at least one of the following of the second resource or any combination thereof: a starting position, an offset, a period, or an ending position.
29. The method according to Supplement 27, wherein the second resource is able to be reconfigured by another third signaling.
30. The method according to any one of Supplements 27 to 29, wherein the third signaling and the first signaling are the same signaling.
31. The method according to any one of Supplements 27 to 29, wherein the third signaling, the first signaling and the second signaling are the same signaling.
32. The method according to any one of Supplements 1 to 31, wherein the second resource is a remaining resource other than the first resource and the third resource.
33. The method according to any one of Supplements 1 to 32, wherein the repeater is in a flexible state or a soft state in the third resource.
34. The method according to Supplement 33, wherein the third resource is a remaining resource other than the first resource and the second resource.
35. The method according to any one of Supplements 1 to 34, wherein the third resource is configured via fourth signaling.
36. The method according to Supplement 35, wherein the fourth signaling indicating at least one of the following of the third resource or any combination thereof: a starting position, an offset, a period, or an ending position.
37. The method according to Supplement 35, wherein the fourth signaling and the first signaling are the same signaling.
38. The method according to Supplement 35, wherein the fourth signaling, the first signaling and the third signaling are the same signaling.
39. The method according to Supplement 35, wherein the fourth signaling and the second signaling are the same signaling.
40. The method according to Supplement 35, wherein the fourth signaling and the third signaling are the same signaling.
41. The method according to any one of Supplements 35 to 40, wherein a second beam to which at least a part of the third resource corresponds is configured/indicated via semi-static fifth signaling, and/or, a third beam to which at least a part of the third resource corresponds is configured/indicated via dynamic sixth signaling.
42. The method according to Supplement 41, wherein the second beam indicated by the fifth signaling is able to be overridden by the third beam indicated by the sixth signaling.
43. The method according to Supplement 41, wherein a beam to which the third resource corresponds is determined according to a priority of the fifth signaling and/or the sixth signaling.
44. The method according to any one of Supplements 41 to 43, wherein the time domain resource(s) to which the second beam indicated by the fifth signaling and/or the third beam indicated by the sixth signaling corresponds is/are able to be indicated as being OFF by the seventh signaling.
45. The method according to Supplement 44, wherein a time domain resource indicated as OFF is not used for forwarding, or, a time domain resource indicated as OFF is in an OFF state or unavailable state.
46. The method according to any one of Supplements 41 to 43, wherein the second beam indicated by the fifth signaling is able to be indicated as being OFF, and/or, the time domain resource to which the third beam indicated by the sixth signaling corresponds is unable to be indicated as being OFF.
47. The method according to any one of Supplements 41 to 46, wherein the second beam indicated by the fifth signaling is able to be reconfigured by another fifth signaling.
48. The method according to any one of Supplements 44 to 47, wherein the seventh signaling and the sixth signaling are the same signaling.
49. The method according to Supplement 48, wherein the sixth signaling indicates a forwarding beam via a value of a beam index, and the seventh signaling indicates OFF via a value of a beam index.
50. The method according to any one of Supplements 44 to 49, wherein whether the time domain resource(s) to which the second beam indicated by the fifth signaling and/or the third beam indicated by the sixth signaling corresponds is/are able to be indicated as being OFF is determined according to a priority.
51. The method according to Supplement 50, wherein a priority of dynamic signaling is higher than that of semi-static signaling.
52. The method according to Supplement 50, wherein in a case where a priority is explicitly indicated, whether a time domain resource is able to be indicated as OFF is determined according to the priority.
53. The method according to Supplement 52, wherein in a case where explicitly indicated priorities are identical, a priority of dynamic signaling is higher than that of semi-static signaling.
54. The method according to Supplement 52, wherein in a case where explicitly indicated priorities are identical, the repeater determines whether a time domain resource is able to be indicated as OFF.
55. An indicating method for a repeater, including:
   a network device transmits configuration information to a repeater; and
   wherein the configuration information at least configures/indicates a first resource and/or a second resource and/or a third resource, and the configuration information is used by the repeater to determine to perform forwarding in the first resource and/or not to perform forwarding in the second resource.
56. A repeater, comprising a memory and a processor, the memory storing a computer program, and the processor being configured to execute the computer program to implement the indicating method for a repeater according to any one of Supplements 1 to 54.
57. A network device, comprising a memory and a processor, the memory storing a computer program, and the processor being configured to execute the computer program to implement the indicating method for a repeater according to Supplement 55.

## Claims

1. A repeater, comprising:
a receiving unit configured to receive configuration information from a network device, wherein the configuration information at least configures/indicates a first resource and/or a second resource and/or a third resource; and
a control unit configured to perform forwarding in the first resource and/or not to perform forwarding in the second resource according to the configuration information.

2. The repeater according to claim 1, wherein the repeater is in an ON state or an available state or a hard state in the first resource; wherein,
the ON state is a standby state or a state in which forwarding is able to be performed,
the standby state being a state that is off by default but in which forwarding is able to be performed upon receiving an indication,
in the state in which forwarding is able to be performed, in a case where there is beam configuration, at least a part of the first resource being configured with a beam for forwarding, and in a case where there is no beam configuration, at least a part of the first resource corresponding to a default beam and/or a fixed beam.

3. The repeater according to claim 1, wherein at least one time unit of the first resource corresponds to a forwarding beam, the forwarding beam being configured or indicated by the network device, or being determined according to a standard predefined rule, or being preset; and
the repeater uses the forwarding beam in an ON state to which the first resource corresponds.

4. The repeater according to claim 3, wherein the forwarding beam is a beam on a backhaul link and/or a beam on an access link;
the repeater uses the beam on the backhaul link to receive a communication signal from the network device, and/or the repeater uses the beam on the backhaul link to transmit a communication signal to the network device; and
the repeater uses the beam on the access link to receive a forwarding signal from the network device, and/or the repeater uses the beam on the access link to transmit a forwarding signal to the network device.

5. The repeater according to claim 3, wherein a forwarding beam to which a part or all of the first resource correspond is configured by semi-static signaling;
or, the first resource and/or the forwarding beam is/are configured by semi-static signaling.

6. The repeater according to claim 1, wherein the first resource has a highest priority, and a beam indication of the first resource is able to be reconfigured only and is unable to be overridden.

7. The repeater according to claim 1, wherein the network device indicates the first resource via first signaling, and configures a first beam for the first resource via second signaling;
wherein the first signaling indicates at least one of the following of the first resource or any combination thereof: a starting position, an offset, a period, or an ending position;
the second signaling indicates the first beam and/or a time domain resource to which the first beam corresponds, the first resource partially overlapping the time domain resource to which the first beam corresponds, or, the first resource completely overlapping the time domain resource to which the first beam corresponds, or, the first resource at least including the time domain resource to which the first beam corresponds.

8. The repeater according to claim 7, wherein the first resource is able to be reconfigured by another first signaling;
or, the first beam is able to be reconfigured only by another second signaling and is unable to be overridden by other signaling.

9. The repeater according to claim 1, wherein the first signaling and the second signaling are the same signaling;
or, the first signaling and the second signaling are different signaling.

10. The repeater according to claim 1, wherein the repeater is in an OFF state or unavailable state in the second resource;
the repeater does not expect to receive signaling for dynamic indicating forwarding and associated with the second resource, and/or, the repeater does not expect to receive signaling for configuring/indicating forwarding and associated with the second resource, and/or, the repeater does not expect to receive signaling configuring/indicating a forwarding beam and associated with the second resource, and/or, the repeater does not expect to receive a forwarding signal in the second resource; and
the network device does not transmit or receive a forwarding signal in the second resource, and/or, the network device does not transmit signaling for dynamic indicating forwarding and associated with the second resource, and/or, the network device does not transmit signaling for configuring/indicating forwarding and associated with the second resource, and/or, the network device does not transmit signaling configuring/indicating a forwarding beam in the second resource.

11. The repeater according to claim 1, wherein the second resource is configured via third signaling,
the third signaling indicating at least one of the following of the second resource or any combination thereof: a starting position, an offset, a period, or an ending position,
the second resource is able to be reconfigured by another third signaling.

12. The repeater according to claim 11, wherein the third signaling and the first signaling are the same signaling;
or, the third signaling, the first signaling and the second signaling are the same signaling.

13. The repeater according to claim 1, wherein the second resource is a remaining resource other than the first resource and the third resource;
or, the third resource is a remaining resource other than the first resource and the second resource.

14. The repeater according to claim 1, wherein the repeater is in a flexible state or a soft state in the third resource;
the third resource is configured via fourth signaling, the fourth signaling indicating at least one of the following of the third resource or any combination thereof: a starting position, an offset, a period, or an ending position.

15. The repeater according to claim 14, wherein the fourth signaling and the first signaling are the same signaling;
or, the fourth signaling, the first signaling and the third signaling are the same signaling;
or, the fourth signaling and the second signaling are the same signaling;
or, the fourth signaling and the third signaling are the same signaling.

16. The repeater according to claim 14, wherein a second beam to which at least a part of the third resource corresponds is configured/indicated via semi-static fifth signaling, and/or, a third beam to which at least a part of the third resource corresponds is configured/indicated via dynamic sixth signaling.

17. The repeater according to claim 16, wherein the second beam indicated by the fifth signaling is able to be overridden by the third beam indicated by the sixth signaling;
or, a beam to which the third resource corresponds is determined according to a priority of the fifth signaling and/or the sixth signaling;
or, a time domain resource to which the second beam indicated by the fifth signaling and/or the third beam indicated by the sixth signaling corresponds is able to be indicated as being off by seventh signaling, the time domain resource indicated as being off being not used for forwarding, or, the time domain resource indicated as being off being in an OFF state or an unavailable state;
or, the second beam indicated by the fifth signaling is able to be indicated as being off, and/or, the time domain resource to which the third beam indicated by the sixth signaling corresponds is unable to be indicated as being off;
or, the second beam indicated by the fifth signaling is able to be reconfigured by another fifth signaling.

18. The repeater according to claim 16, wherein whether the time domain resource to which the second beam indicated by the fifth signaling and/or the third beam indicated by the sixth signaling corresponds is able to be indicated as being off is determined according to a priority;
a priority of dynamic signaling is higher than that of semi-static signaling; and
when priorities are explicitly indicated, whether the time domain resource is able to be indicated as being off is determine according to the priorities; wherein in a case where the explicitly indicated priorities are identical, the priority of the dynamic signaling is higher than that of the semi-static signaling, or, in a case where the explicitly indicated priorities are identical, the repeater determines whether a time domain resource is able to be indicated as being off.

19. A network device, comprising:
a transmitting unit configured to transmit configuration information to a repeater;
wherein the configuration information at least configures/indicates a first resource and/or a second resource and/or a third resource, and the configuration information is used by the repeater to determine to perform forwarding in the first resource and/or not to perform forwarding in the second resource.

20. A communication system, comprising:
a repeater configured to receive configuration information from a network device, wherein the configuration information at least configures/indicates a first resource and/or a second resource and/or a third resource; and perform forwarding in the first resource and/or not to perform forwarding in the second resource according to the configuration information; and
the network device configured to transmit the configuration information to the repeater.
